# EUROPEAN PATENT SPECIFICATION

(11) **EP 3 872 398 B1**
(45) Date of publication and mention of the grant of the patent: **28.12.2022**
(21) Application number: 21158115.2
(22) Date of filing: 19.02.2021
(51) Int. Cl.: F21S 43/239, F21S 43/245, F21V 8/00, G02B 6/00

(54) **LIGHT GUIDE AND LIGHTING SYSTEM WITH LIGHT GUIDE**
LICHTLEITER UND BELEUCHTUNGSSYSTEM MIT EINEM LICHTLEITER
GUIDE DE LUMIÈRE ET SYSTÈME D'ÉCLAIRAGE DOTÉ D'UN GUIDE DE LUMIÈRE

(30) Priority: 26.02.2020 ES 202030162
(43) Date of publication of application: 01.09.2021
(73) Proprietor: Seat, S.A., 08760 Martorell (ES)
(72) Inventor: CORULL MASSANA, Ernest, 08760 Martorell (ES); MORÓN MORTE, Juan Carlos, 08760 Martorell (ES); PIQUÉ COSCONERA, Xavier, 08760 Martorell (ES); POZO VALIENTE, Aitor, 08760 Martorell (ES); GURMENDI CULLA, Mikel, 08760 Martorell (ES)
(74) Representative: Ponti & Partners, S.L.P

(56) References cited:
- EP-A1- 1 746 457
- EP-A1- 2 703 220
- US-A1- 2004 125 588
- US-A1- 2004 125 592
- US-A1- 2010 046 200
- US-A1- 2013 051 075
- US-A1- 2017 241 616

## Description

The present invention relates, first, to a light guide capable of achieving a "homogeneous" lighting of a surface of the light guide.

The present invention relates, second, to a lighting system, preferably for installing in a lighting panel of a vehicle, comprising the light guide according to any one of the embodiments or variants described so far, wherein the system does not use a diffuser which covers the visible surface of the light guide, being able to obtain a high homogeneity of the light emitted by said light guide.

### Background of the invention

Lighting systems for vehicle interiors comprising the elements described in the preamble of claim 1 of the present invention are known.

In particular, illuminating the inside a tail lamp (pilot light) or a front lamp (headlamp) of a vehicle is known, for example, in order to illuminate the surfaces present inside the pilot light.

In general, these systems for lighting portions or exteriors of a vehicle, and especially surfaces of the inside of a tail lamp (pilot light) or a front lamp (headlamp) of a vehicle, are based on providing an elongated light guide which runs along at least one longitudinal direction of the zone to be illuminated of a vehicle.

A light guide has the main function of transmitting the light beams generated by one or more light sources or emitters along this longitudinal direction which enter into the light guide in the longitudinal direction "X", transmitting them along the guide due to the action of the internal reflection in the internal walls thereof and finally extracting the light beams, for example, in the vertical direction "Z" of the light guide.

The light beams escape from the inside of the light guide thanks to the provision of a plurality of outlet elements or optical structures arranged at different points of the light guide configured to direct the light beams which hit said outlet elements or optical structures towards the substantially vertical direction "Z" in order to be extracted towards the outside of the light guide, thereby generating the lighting sought in each case. If the optical structures or other known light extraction structures are homogeneously distributed along the light guide, the lighting perceived by an external observer using the light guide will have a progressive gradient, such that a greater light intensity will be perceived near the light guide and a lower light intensity as we move away from it. It should be noted that the light emitters are illuminating only a side surface of the light guide.

The present invention precisely seeks not to have this progressive light gradient along the light guide, but rather just the opposite, in other words, to make an external observer perceive a surface of said light guide illuminated homogeneously, in other words, with a uniform light intensity and temperature, among other parameters.

In order to solve said technical problem, the following solutions are known today: the use of a massive light guide with a diffuser arranged between the observer and the light guide and also OLED technology.

However, the drawbacks of these two currently known techniques are the following:
- Massive guide with diffuser: It is necessary to implement an additional component, resulting in increased costs and an increase in the complexity of both the production process and the assembly process. Furthermore, it increases the volume of space necessary inside the pilot light or headlamp. Finally, the implementation of a diffuser entails a greater loss of light, requiring light emitters with higher power and intensity.
- OLED technology: This is associated with a very high cost and, furthermore, it is a technology that is very sensitive to moisture and high temperatures, making it difficult to implement in different sectors, such as use in motor vehicles.

Therefore, it appears to be necessary to offer an alternative to the State of the Art which covers the gaps found in it, providing a light guide adapted to, by way of example, be installed in an interior or exterior portion of a vehicle, and in particular to homogeneously illuminate one or more surfaces (for example a surface of the inside of a headlamp) without there being a light gradient in the light guide (in other words, an external observer perceives the same intensity of light coming out of the light guide both in the segment close to the light emitter, and in the segment of the guide far from the light emitter) and which furthermore does not use additional components, such as a light diffuser which covers the visible surface of the light guide.

US 2017/241616 discloses a light guiding lens configured so as to receive light from a light source through a light incident surface and guide the light to a light exiting surface for light projection. A functional surface of the light guiding lens can include a plurality of regularly arranged flute cuts configured to diffuse light and a plurality of prism cuts configured to reflect light, wherein the plurality of prism cuts are arranged at random on the functional surface and have respective different sizes.

### Description of the invention

The first object of the present invention is to provide a light guide, suitable to be installed in the interior or exterior of a vehicle, for example, integrated inside a tail lamp (pilot light) or a front lamp (headlamp) and in order to homogeneously illuminate a surface to be illuminated, and which solves the aforementioned disadvantages and has the advantages described below. Preferably, the surface to be illuminated by this lighting system is a surface of the inside of a headlamp of a vehicle, although other interior portions of the vehicle can be perfectly illuminated by the system of the invention, such as decorative surfaces arranged on a dashboard or on a panel of a door.

According to a first aspect, the present invention provides a light guide, according to claim 1.

The light guide of the invention does not have any light diffusers covering the visible surface of the light guide.

As indicated, both the plurality of optics and the plurality of surface engravings may be arranged on the first main surface of the light guide or alternatively on the second main surface of the light guide. The invention, in both cases, works correctly.

Alternatively, but less desired (due to it being less efficient), it could be the case that the plurality of optics and the plurality of surface engravings are arranged on both surfaces, in other words, on the first main surface and also on the second main surface. For example, the plurality of optics could be arranged on the first main surface and the plurality of surface engravings on the second main surface, both performing the function thereof. Now, in this case, some of the incident light beams reflected by the surface engravings would strike the optics, causing a new reflection of the light beams and, consequently, decreasing the light efficiency of the light guide. Conversely (in other words, by arranging the plurality of optics on the first main surface and the plurality of surface engravings on the second main surface), it would occur that some of the light beams which are extracted due to the reflection thereof on the facets of the optics strike the surface engravings. The plurality of surface engravings would perform the additional function of diffusing light, in other words, they would scatter them in many directions. Therefore, this alternative configuration is perfectly valid in order to meet the aforementioned objectives, although some side effects could appear.

The surprising technical effect which is achieved with the use of this light guide of the invention is homogeneously illuminating one or more surfaces (for example, a surface of the inside of a headlamp), in other words without an external user perceiving any type of light gradient on the surface to be illuminated but rather a completely uniform light along the surface through which the light guide runs internally. This objective is achieved by implementing, in a combined manner, optical structures which enable the extraction of different types of light beams and, in particular, light beams which are transmitted through the inside of the light guide in different directions, according to the longitudinal direction "X".

The interspersed arrangement between each other is understood in the present invention as an arrangement wherein one or more optics are arranged between two or more surface engravings and, additionally, wherein one or more surface engravings are located between two or more optics. This interspersed arrangement occurs along the entire length of the light guide, in the aforementioned longitudinal direction "X".

The longitudinal direction "X" is understood in the present invention as the main direction wherein the light guide extends and, consequently, the direction of transmission of the light beams.

According to a first embodiment of the light guide, the plurality of optics is arranged distributed inside the light guide along the longitudinal direction "X" following an evolution of the geometry thereof from the zone of the light guide closest to the side surface for light entry to the furthest zone, wherein said evolution of the geometry of the optics is based on a growth in the height Hₒ thereof along this longitudinal direction "X", wherein the height Hₒ is measured in the direction "Z" for light extraction from the light guide, such that the height Hₒᵢ of the optics arranged in the zone closest to the side surface for light entry is smaller than the height of the optics arranged in the zone furthest from the side surface for light entry.

The surprising technical effect which is achieved with this evolution of the geometry of the plurality of optics along the light guide is to extract, in all the zones of the light guide, both those close to the light emitters as well as those further from said light emitters, a similar amount of light beams. In particular, it will make it possible to extract the few light beams which reach said zone further from the light emitter of the light guide.

In the case of the first embodiment, optionally, the plurality of optics may be arranged along the longitudinal direction "X" uniformly spaced at a distance Sₒ, in other words, with one same distance between two adjacent optics. In order to maintain the homogeneity of the light emitted by the light guide and make the optics extract a similar amount of light beams, the aforementioned height Hₒᵢ of the optics or the amplitude thereof can be increased.

According to a second embodiment of the light guide, the plurality of optics is arranged inside the light guide distributed along the longitudinal direction "X" following an evolution in terms of the gap thereof between adjacent optics from the zone of the light guide closest to the side surface for light entry to the furthest zone, such that the gap between two adjacent optics arranged in the zone closest to the side surface for light entry is larger than the gap between two adjacent optics arranged in the zone furthest from the side surface for light entry.

The technical advantage obtained thanks to the presence of this evolution in terms of the gap thereof between adjacent optics is that, in the zone of the light guide furthest from the light emitter, the plurality of optics has a smaller gap between each other, according to the longitudinal direction "X", in order to extract the few light beams which reach said zone of the light guide, compared to the gap in the zone closest to the light emitter.

According to a possible embodiment, which is compatible with any of the first or second embodiments previously explained, the light guide decreases in thickness, from a zone of the light guide closest to the side surface for light entry to the zone furthest from the side surface for light entry, in order to enable each optic to be higher than the previous optic in the direction "Z" for extracting light from the light guide. In this manner, the cross section transmitting the light beams through the inside of the light guide is reduced, such that, in the longitudinal direction "X", each optic will be arranged at a greater height than the previous optic. In this manner, it is possible to extract, in all the zones of the light guide, both the ones close to the light emitters and those further from said light emitters, a similar number of light beams.

It should be noted that the evolution of the geometry of the optics along the longitudinal direction "X" can combine one or more of the features presented above, being able to be, for example, a distribution combining the growth in height Hₒ along this longitudinal direction "X" and that the gap between two adjacent optics arranged in the zone closest to the side surface for light entry is larger than the gap between two adjacent optics arranged in the zone furthest from the side surface for light entry.

Preferably, one or more surface engravings are interspersed between two consecutive optics in the light guide in the longitudinal direction "X". This arrangement can be uniform along the longitudinal direction "X" or in a specific zone of the light guide. In other words, according to one embodiment, in the zone closest to the side surface for light entry, a surface engraving would be arranged interspersed between two consecutive optics, in the zone furthest from the side surface for light entry, three surface engravings would be arranged interspersed between two consecutive optics and, in an intermediate zone arranged between the closest zone and the zone furthest from the side surface for light entry, two surface engravings would be arranged interspersed between two consecutive optics.

In this previous case wherein one or more surface engravings are interspersed between two consecutive optics in the longitudinal direction "X", a possible exemplary embodiment is that the plurality of surface engravings is arranged distributed along the longitudinal direction "X" following an evolution of the geometry thereof from the zone of the light guide closest to the side surface for light entry to the furthest zone, wherein said evolution of the geometry of the surface engravings is based on a growth along the longitudinal direction "X" of the width "Wix" thereof (wherein the width "Wix" is the magnitude of the engraving in the direction "X"), such that the length of the surface engravings arranged in the zone closest to the side surface for light entry is smaller than the length of the surface engravings arranged in the zone furthest from the side surface for light entry.

In this same case wherein one or more surface engravings are interspersed between two consecutive optics in the longitudinal direction "X", another possible second embodiment (compatible with the first embodiment) is that the roughness of each surface engraving extends a depth "P_{iy}" in a direction "Y" transverse to the longitudinal direction "X", wherein the plurality of surface engravings is arranged following an evolution of the geometry thereof from the zone of the light guide closest to the side surface for light entry to the furthest zone, wherein said evolution of the geometry of the surface engravings is based on an increase in the depth "P_{iy}" of the roughness, such that the length "P_{iy}" of the roughness of the surface engravings arranged in the zone closest to the side surface for light entry is smaller than the length "P_{iy}" of the roughness of the surface engravings arranged in the zone furthest from the side surface for light entry.

In this same case, wherein one or more surface engravings are interspersed between two consecutive optics in the longitudinal direction "X", another possible embodiment (compatible with the first and second exemplary embodiments) is that the plurality of surface engravings is arranged distributed along the longitudinal direction "X" following an evolution in terms of the gap thereof in the longitudinal direction "X" between adjacent surface engravings from the zone of the light guide closest to the side surface for light entry to the furthest zone, such that the gap between adjacent surface engravings arranged in the zone closest to the side surface for light entry is larger than the gap between adjacent surface engravings arranged in the zone furthest from the side surface for light entry.

It is highlighted that the evolution of the geometry of the surface engravings along the longitudinal direction "X" can combine one or more of the features presented above, being able to be, for example, a distribution combining the growth in the width "Wix" thereof along this longitudinal direction "X" and increasing the length "P_{iy}" of the roughness of the surface engravings. It could also combine, alternatively or in addition to the features presented above, a decrease in the gap between adjacent surface engravings. With the combination of the different distributions of surface engravings presented, it is possible to extract, in all the zones of the light guide, both the ones close to the light emitters and the ones further from said light emitters, a similar amount of light beams and with similar directional properties along the longitudinal direction "X".

It should be mentioned that the different distributions presented for the optics can be combined with the different distributions presented for the surface engravings, thus achieving a uniform extraction of light from the different types of light beams extracted by each of the two optical structures presented.

In the embodiments discussed so far, the light guide can be elongated or flat. As for the elongated light guide, it can be, for example, a light guide which is cylindrical or square, but which essentially extends in the longitudinal direction "X".

Instead, hereafter, only specific embodiments of the present invention for flat light guides will be specified. Throughout this invention, a flat light guide is understood to be a light guide which extends in two directions.

According to a third embodiment of the flat light guide, the first main surface and the second main surface additionally extend in a direction "Y" transverse to the longitudinal direction "X", wherein the plurality of optics is arranged aligned in rows along the transverse direction "Y", and wherein the plurality of surface engravings is arranged aligned in rows along the transverse direction "Y", wherein two or more rows of surface engravings are arranged between two adjacent rows of optics.

According to a variant of this third embodiment of the flat light guide, the roughness of each surface engraving is spaced at a distance "d_{iy}" in the transverse direction "Y" between two adjacent engraved surfaces, wherein the plurality of surface engravings is arranged following an evolution of the geometry thereof from the zone of the light guide closest to the side surface for light entry to the furthest zone, wherein said evolution of the geometry of the surface engravings is based on a decrease in the gap distance "dᵢ" between adjacent surface engravings, such that the gap distance between the surface engravings arranged in the zone closest to the side surface for light entry is larger than the gap distance between the surface engravings arranged in the zone furthest from the side surface for light entry.

According to another variant of the variant of the third embodiment of the flat light guide, the light guide comprises:
- in a first zone closest to the side surface for light entry, the light guide comprises two rows of surface engravings between two consecutive optics, wherein each engraved surface of the first row is in an alternating position with respect to the position of the engraved surface of the second row, along a longitudinal direction "X";
- progressively along the longitudinal direction "X" and as a distance to the side surface for light entry increases, the engraved surfaces decrease the gap distance "dᵢ" between two adjacent engraved surfaces, such that they are no longer alternating, but rather there is an overlap between them, wherein the unengraved zone of the first row is in an alternating position with respect to the position of the unengraved zone of the second row, according to a longitudinal direction "X"; and
- in the final zone of the light guide furthest from the side surface for light entry, the engraving surfaces almost overlap, being able to become a continuous line, in order to maximise the extraction of the light beams which reach the end of the light guide by internal reflection.

According to an alternative embodiment to said third embodiment of the flat light guide, which may include a combination of the features mentioned in the first embodiment and second embodiments, the first main surface and the second main surface additionally extend in a direction "Y" transverse to the longitudinal direction "X", wherein the plurality of optics and the plurality of surface engravings are arranged interspersed in the transverse direction "Y". In this manner, the optics and the surface engravings will be arranged interspersed between each other both in the longitudinal direction "X" and in the transverse direction "Y", in a manner similar to a chessboard. Said alternating of surface engravings and optics in both directions of the light guide favours the homogeneity of the light extracted and observed by an external observer, by constantly interspersing the type of light beams extracted by both optical structures. Additionally, both the optics and the surface engravings can incorporate one or more of the distributions along the longitudinal direction "X" presented in the first embodiment and second embodiment, favouring the creation of a homogeneously illuminated surface. According to a second aspect, the present invention also provides a lighting system suitable to be installed in the interior or exterior of a vehicle, for example, in a lighting panel comprising the light guide in accordance with any one of the embodiments or variants described so far and, furthermore, at least one light emitter configured to direct the light towards one of the side surfaces of said light guide. In order to improve the capacity to direct the light beams emitted by the at least one light emitter, said light can be introduced into the side surface of the light guide by means of at least one reflection, a collimation of the light beams, or any other.

Preferably, the previous lighting system of the invention does not have any light diffusers covering the outside the first main surface. In this manner, if an external observer views the illuminated surface of the light guide from a sufficient distance, they will perceive a homogeneously illuminated surface without needing to interpose a light diffuser. Throughout this invention, a light diffuser is understood as that material capable of diffusing or dispersing light beams in different directions, such as by means of translucent materials.

The main advantages of the light guide and the lighting system incorporated by the light guide is that the light guide manages to homogeneously illuminate one of the surfaces thereof and furthermore:
- It is cheaper than other alternative solutions existing currently.
- It has a non-variable behaviour depending on the temperature and moisture of the environment.
- It is more photometrically efficient, since it does not have intermediate elements between the observer and the illuminated surface of the light guide.

With respect to the at least one light emitter, according to a first embodiment, it comprises a plurality of light emitters arranged distributed in different specific positions along the transverse direction "Y" configured to generate light beams which are introduced inside the surface for light entry of the light guide, or side surface. Said at least one light emitter is installed touching or very close to said side surface, thus preventing light from being lost and improving the light efficiency of the lighting system.

In the case of there being more than one light emitter, these can be arranged on a printed circuit board (PCB) which is operatively coupled with a controller having a control circuit which includes a driver circuit of the light emitter in order to simultaneously or sequentially control the activation and deactivation of the different light emitters. The PCB can be any type of circuit board, including but not limited to any flexible PCB and/or rigid PCB. The controller can be arranged inside or outside of the lighting system.

The at least one light emitter or the plurality of light emitters is/are controllable between a first off state and a second on state.

The at least one light emitter can include any known form of light source or emitter. A light-emitting diode (LED) is chosen as the preferred light emitter, although any other form of lighting configured to emit light can be used, such as fluorescent lighting, organic LEDs (OLED), polymer LEDs (PLED) or solid-state lighting.

The at least one light emitter emits radiation visible to the human eye, each light source having a colour, which can be the same or different if there is more than one light emitter. Regarding the colour of the light emitter, it can be any colour, the one required in each case.

With respect to the light guide, it has the length in the direction "X" necessary according to the surface to be illuminated. The light guide can be a substantially transparent or translucent guide suitable for transmitting light. The light guide can be formed from a rigid material which is made up of a curable substrate such as a polymerisable composite, a mould in transparent material (MIC), or mixtures thereof. Acrylates are also commonly used to form rigid light tubes, as well as polymethyl methacrylate (PMMA), which is a known substitute for glass. A polycarbonate material can also be used in an injection moulding process in order to form the rigid light guide.

For a better understanding of what has been stated, drawings are attached wherein, schematically and only as a non-limiting example, practical cases of several embodiments of the light guide of the invention are represented.

### Brief description of the figures

Figure 1 is a front perspective view of a tail lamp (pilot light) of a vehicle, wherein the solution proposed by the present invention homogeneously illuminates the surfaces of the inside of the pilot light.
Figure 2 is a plan view of a possible example of a surface to be illuminated inside the pilot light of the ones shown in the previous Figure 1 and wherein the flat light guide of the invention is envisaged, which is represented when it is illuminated, such that the white zones are the light coming out towards the external observer.
Figure 3 is a detailed view of a portion of the zone "A" closest to the light emitter of Figure 2.
Figure 4 is a detailed view of a portion of the intermediate zone "B" of Figure 2.
Figure 5 is a detailed view of a portion of the zone "C" furthest from the light emitter of Figure 2.
Figure 6 is a perspective view of a possible light guide, wherein the direction of the light beams is schematically illustrated.
Figure 7 is a perspective view of a possible embodiment of the light guide of the invention, wherein an optic and a surface engraving have been schematically represented, as well as two different beams, one of which strikes the surface engraving and the other strikes the optic.
Figure 8 is a perspective view of another possible embodiment of the light guide of the invention, wherein surface engravings and optics arranged interspersed between each other have been schematically represented.
Figure 9 is a cross-sectional view of yet another possible embodiment of the light guide of the invention, wherein only the optics have been represented, and wherein a possible evolution of the optics from the zone closest to the light emitter to the furthest zone is illustrated.
Figure 10 illustrates a variant of the flat light guide of the present invention, wherein the plurality of optics and the plurality of surface engravings are arranged interspersed both in the longitudinal direction "X" and in the direction "Y" transverse to said longitudinal direction "X". A cross section along the line A-A' is also included in the lower portion of the drawing.

### Description of several exemplary embodiments

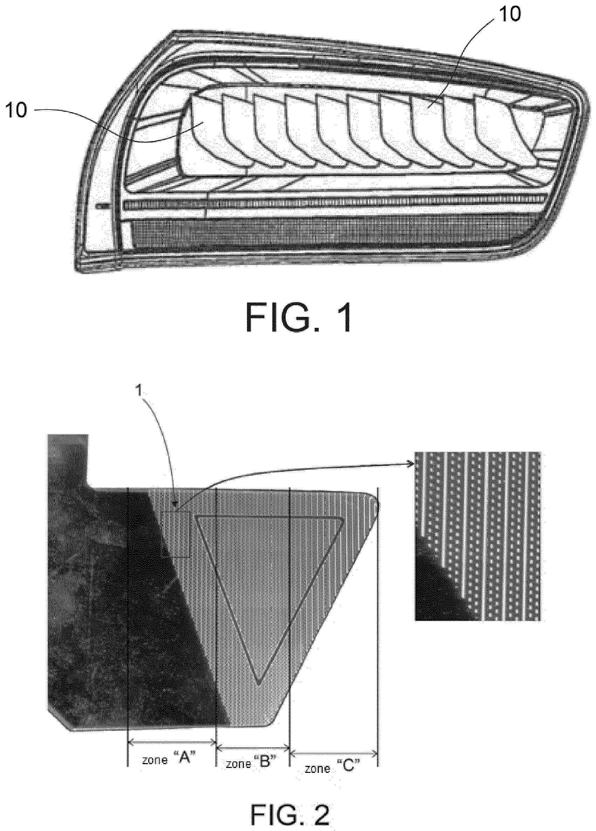

Next, several exemplary embodiments of the light guide for installing in vehicles of the present invention are described with reference to Figures 1 to 10.

With reference to Figure 1, it shows a tail lamp (pilot light) of a vehicle, wherein the solution proposed by the present invention homogeneously illuminates the surfaces (1) inside the pilot light. The rear lamp of the vehicle is configured to perform its own lighting and signalling functions, such as being a turn signal, position light, reverse gear, brake light, etc. In the embodiment shown in Figure 1, ten flat light guides (10) are arranged slightly obliquely with respect to the advance direction of the vehicle, being partially overlapped between them. The surface (1) to be illuminated corresponds to the surface seen from outside the vehicle.

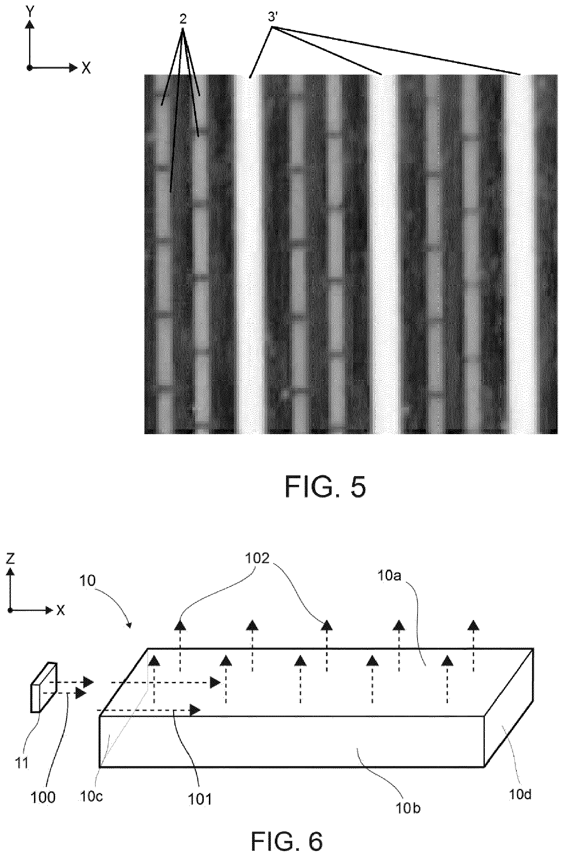

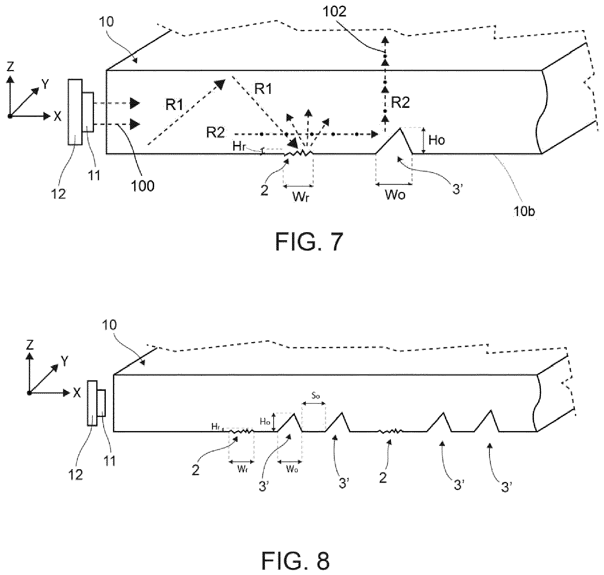

With reference to Figure 6, it generally represents a possible embodiment of a conventional light guide (10), which has: a first main surface (10a), which extends in a longitudinal direction "X" and is configured to extract light beams (102) from the light guide towards a vertical direction "Z" for extracting light from the light guide, a second main surface (10b), opposite from the first main surface (10a), and at least one side surface (10c), arranged between the first main surface (10a) and the second main surface (10b), wherein the at least one side surface (10c) is configured to receive the light beams (100) generated by at least one light emitter (11) and transmit them (101) through the inside of the light guide (10) as an effect of internal reflection. In this specific case, the light guide (10) also has a second side surface (10d), opposite from the side surface (10c), and wherein the second side surface (10d) is also arranged between the first main surface (10a) and the second main surface (10b). In Figure 6, the light beams (100, 101, 102) have been represented with dashed lines. As the distance from the light emitter (11) increases, in other words, the distance with respect to the side surface (10c) increases and the distance with respect to the second side surface (10d) decreases in the longitudinal direction "X", fewer light beams (101) remain inside the light guide (10), since they have been extracted through the first main surface (10a), for which reason, since the objective of the present invention is to homogeneously illuminate the first main surface (10a), it becomes necessary to distribute optical structures in a non-regular manner, as provided by this invention and illustrated in the following Figures 7 to 10.

As shown in Figures 7 to 10, the light guide (10) of the invention is characterised in that it comprises, inside of it, two types of different light extraction structures, which are arranged interspersed between each other along the longitudinal direction "X" of the light guide (10):
- a plurality of optics (3a', 3b', 3c') with a triangular or pyramidal cross section, which has the main function of extracting the light which moves in a practically longitudinal direction through the inside of the light guide; and
- a plurality of surface engravings (2), wherein each surface engraving (2) is configured by a small roughness, with a smaller height (Hᵣ) than the height (Hₒ) of the optics (3a', 3b', 3c'), made on an outer surface of the light guide (10). The plurality of surface engravings (2) has the main function of extracting the light which moves in a more transverse direction through the inside of the light guide (10).

Figures 7 and 8 indicate the height (Hₒ) of an optic (3') and also the height (Hᵣ) of a surface engraving (2) and it is clearly perceived that there is a large difference between the two. By way of example, in a light guide (10) of the invention which has a total height of 3 mm, the height (Hₒ) of the optics can be comprised between 0.03 mm and 0.14 mm and the height (Hᵣ) of the surface engravings (2), 0.01 mm, and therefore, the ratio between heights is comprised between 3 (0.03 mm/0.01 mm) and 14 (0.14 mm/0.01 mm). It should be noted that the height of the aforementioned optical structures is understood to be the elevation thereof in the transverse direction "Z".

When we refer to the term "interspersed" while describing the arrangement of the two types of light extraction structures (plurality of optics (3a', 3b', 3c') and plurality of surface engravings (2)) along the longitudinal direction "X", this can mean multiple possibilities, for example the succession of the following sequences in said longitudinal direction "X": 1 surface engraving (2) and 1 optic (3'), 2 surface engravings (2) and 1 optic (3'), 1 surface engraving (2) and 2 optics (3'), etc.

In the exemplary embodiments of the light guides (10) illustrated in Figures 7 to 10, all the light extraction structures are located on the second main surface (10b), which corresponds to the lower surface, thus emitting the light beams (102) in a direction essentially perpendicular to the first main surface (10a), see Figure 7, with which it performs the extraction of the light beams from the light guide (10) and, consequently, the homogeneous lighting of the first main surface (10a).

In particular reference to Figure 7, it represents two trajectories of rays of light by means of two different types of arrows: a first trajectory in a dashed line schematically represents a first incident ray of light (R1) from the left side of the drawing which is reflected on the surface engraving (2) or roughness, while a second ray of light (R2) substantially parallel to the longitudinal direction "X" strikes an optic (3'). The first ray of light (R1) is reflected by the surface engraving (2) in multiple directions (i.e., with a diffuse reflection), while the second ray of light (R2) is reflected by the optics (3') in a substantially vertical direction "Z" and is extracted towards the outside of the light guide (10). In general terms, the surface engravings (2) are configured to extract light beams which strike them obliquely with respect to the longitudinal direction "X", in other words, which do not move according to a direction substantially parallel to the second main surface (10b). On the contrary, the optics (3') are configured to extract by reflection light beams which strike in a direction substantially parallel to the longitudinal direction "X" or substantially parallel to the second main surface (10b).

In particular reference to Figure 8, it illustrates another possible exemplary embodiment of the light guide (10) of the present invention, wherein a surface engraving (2) is interspersed between two optics (3'). In order to achieve the objective of homogeneously illuminating the first main surface (10a) of the light guide (10), the optics (3') and/or the surface engravings (2) have an evolution of the geometry or distribution thereof from the zone of the light guide closest to the side surface (10c) for light entry to the furthest zone, according to one of the following distributions:
- According to an exemplary embodiment, the height (Hₒ) of the optics (3') can increase, thus enabling the reflection surfaces of the optics (3') to be slightly higher, according to a transverse direction "Z", than the previous optic (3').
- According to another exemplary embodiment, the gap distance (Sₒ) between consecutive optics (3') can decrease, thus enabling the light extraction structures to be increased in the zones furthest from the light emitters (10).
- According to another exemplary embodiment, the width (Wᵣ) of the surface engravings (2) can be increased, thus enabling the area of the light extraction structures to be increased in the zones furthest from the light emitters (10).
- According to another exemplary embodiment, the gap distance between consecutive surface engravings (2) can decrease, thus enabling the light extraction structures to be increased in the zones furthest from the light emitters (10).

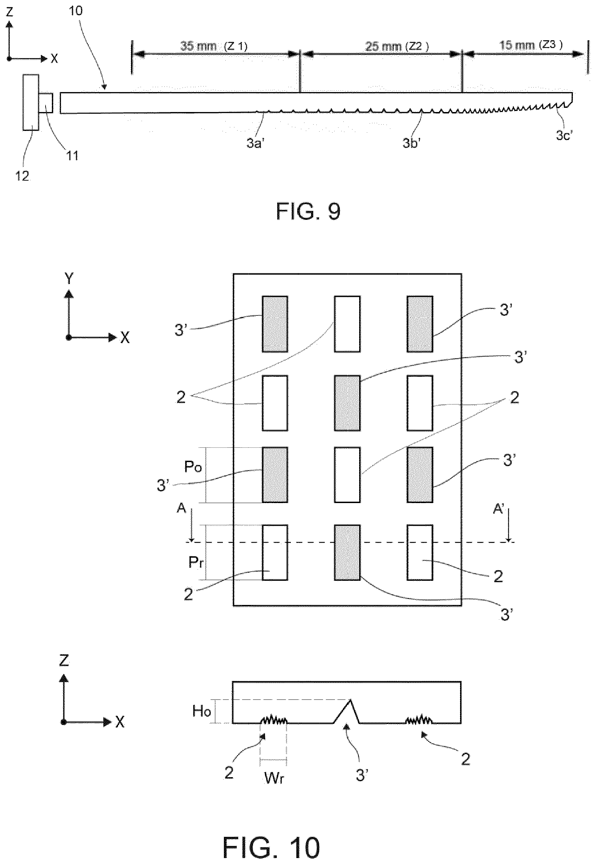

In particular reference to Figure 9, it illustrates in a cross section a possible embodiment of the light guide (10), wherein the plurality of optics (3a', 3b', 3c') is arranged longitudinally in a longitudinal direction "X" and which grow in depth and, consequently, in amplitude. In this manner, in the zone furthest from the light emitter (11) corresponding to the zone Z3, the optics (3c') will be larger (in size and also in height) in order to extract the few light beams which reach said zone of the light guide (10). In Figure 9, engraved surfaces have not been represented, although they would exist. The light beams have not been illustrated either. It is an image of the light guide wherein it attempts to illustrate a possible evolution of the optics (3a', 3b', 3c') from the zone closest to the light emitter (11) to the furthest zone, both in the gaps between the optics (3a', 3b', 3c') as well as the size and height thereof. If, on the other hand, all the optics (3a', 3b', 3c') were the same, a large amount of light would be extracted in the zone near the light emitter and there would be practically no light beams in the zone furthest away.

Figure 9 also shows that the light guide (10) itself decreases in thickness, in other words, the length of the light guide (10) in the transverse direction "Z", which makes it possible for each optic (3a', 3b', 3c') to be higher than the previous one.

Figures 6, 7, 8 and 9, schematically reference a light guide (10) which extends only in the longitudinal direction "X". The stated embodiments are equally valid in the case of a flat light guide (10), in other words, one which additionally extends in the transverse direction "Y".

Figures 2, 3, 4 and 5 reference a flat light guide (10) which extends both in the longitudinal direction "X" and in the transverse direction "Y".

In reference to Figure 2, it illustrates a possible example of an illuminated surface (1) of Figure 1. In particular, and in order to facilitate the understanding of the present invention, those zones wherein there is some type of optical light extraction structure, such as surface engravings (2) or optics (3a', 3b', 3c'), are represented in white and those zones wherein there is no type of optical light extraction structure are represented in black. In this manner, if an external observer views the light guide (1) at a very reduced distance, they could view said optical light extraction structures. On the contrary, when the light guide is illuminated, the observer would view a homogeneous illuminated surface (1). In order to facilitate the understanding of the invention, the illuminated surface (1) has been separated into three different sections: zone "A" closest to the light emitter, an intermediate zone "B" and a zone "C" furthest from the light emitter, but it is clear that the progression is completely homogeneous. The light emitter (not drawn) would be on the left portion of Figure 2.

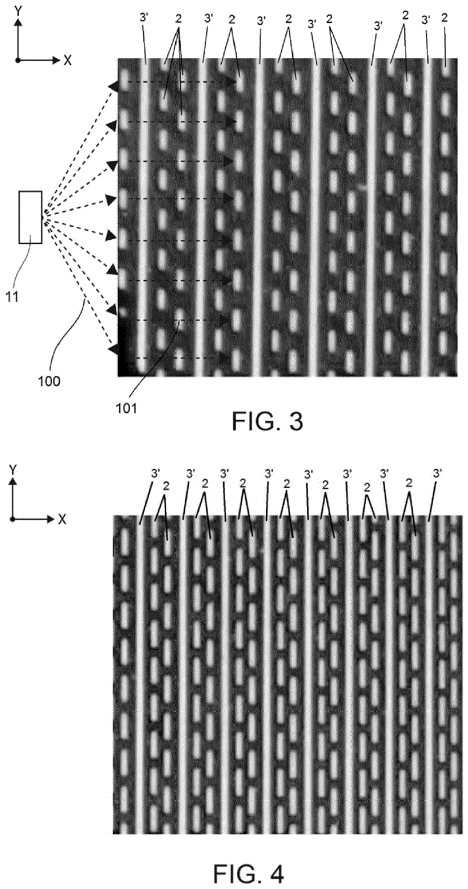

In particular reference to Figure 3, it illustrates a specific portion of the first zone "A" closest to the light emitter of Figure 2, wherein the surface engravings (2) also have an evolution in the longitudinal direction "X" from the zone closest to the light emitter to the zone furthest from it. Thus, in this first zone "A" of Figure 2 (seen in more detail in Figure 3) it comprises two rows of surface engravings (2) between two consecutive optics (3'). Each surface engraving (2) is alternating in the transverse direction "Y" with the previous one. By way of example, in this zone "A" the height (Hₒ) of the optics is 0.03 mm and the height (Hᵣ) of the surface engravings (2) is 0.01 mm, and therefore, the ratio between heights is 3 (0.03 mm/0.01 mm). In this zone "A", the distance in the direction "Y" between two surface engravings (2) of the same column is 0.48 mm and the depth "P_{iy}" (i.e., the length in the direction "Y") of each surface engraving (2) is 0.30 mm. In this zone "A", the engraved area is 10.65%.

Progressively in the longitudinal direction "X", the plurality of surface engravings (2) increases in depth "P_{iy}" in the direction "Y" transverse to the longitudinal direction "X", such that they are no longer in alternating positions like the zone "A" shown in Figure 3, but rather there is an overlap between them. What is sought is that the unengraved zone does remain as alternating between the two rows. This is the case of the intermediate zone "B" of Figure 2, which is illustrated in more detail in Figure 4.

Finally, in the final zone of the light guide (10) in the longitudinal direction "X" (called zone "C" in Figure 2) and with the aim of maximising the extraction of the few light beams which reach said end, the surface engravings (2) are practically overlapping, being able to become a continuous line. This last zone "C" is illustrated in more detail in Figure 5. In the case of this Figure 5, the amplitude of the surface engravings (2) according to the longitudinal direction "X" is not constant, but rather can increase as the distance with respect to the light emitter increases. Likewise, the width (Wₒ) in the longitudinal direction "X" of the optics (3') increases, or they are higher (Hₒ). By way of example, in this zone "C", the height (Hₒ) of the optics is 0.14 mm and the height (Hᵣ) of the surface engravings (2) is 0.01 mm, and therefore, the ratio between heights is 14 (0.14 mm/0.01 mm). In this zone "C", the distance in the direction "Y" between two surface engravings (2) of the same column is 0.05 mm (in other words, it has substantially decreased with respect to zone "A") and the depth (in other words, the length in the direction "Y") of each surface engraving (2) is 0.73 mm, (in other words, it has increased substantially with respect to zone "A"). In this zone "C", the engraved area is 30.38%.

In particular reference to Figure 10, it illustrates a variant of the flat light guide (10) shown in Figures 3 to 5 of the present invention, wherein the plurality of optics (3') and the plurality of surface engravings (2) are arranged interspersed both in the longitudinal direction "X" and in the direction "Y" transverse to said longitudinal direction "X". A total of three rows with four aligned columns have been represented, wherein in each row and in each column an optic (3') and a surface engraving (2) are interspersed. It should be noted that, both in the longitudinal direction "X" and in the direction "Y" transverse to said longitudinal direction "X", the aforementioned optical light extraction structures may have variations in the distributions thereof, as explained above according to the different embodiments presented.

Although reference has been made to a specific embodiment of the invention, it is apparent to a person skilled in the art that the light guide suitable for installing in vehicles and the lighting system described above are susceptible to numerous variations and modifications, without departing from the scope of protection defined by the attached claims.

## Claims

1. A light guide (10), comprising a first main surface (10a), which extends in a longitudinal direction "X" and is configured to extract light beams from the light guide, a second main surface (10b), opposite from the first main surface (10a), and at least one side surface (10c), arranged between the first main surface (10a) and the second main surface (10b), wherein the at least one side surface (10c) is configured to receive the light beams generated by at least one light emitter (11) and transmit them through the inside of the light guide (10) as an effect of internal reflection; the light guide (10) comprising:
- a plurality of optics (3a', 3b', 3c') arranged distributed along the second main surface (10b) of the light guide (10), each optic spaced with respect to the following optic by a distance Dxᵢ in the longitudinal direction "X", wherein each optic has a triangular or pyramidal geometry, and wherein the plurality of optics is configured to extract from the light guide (10) through the first main surface (10a) by reflecting the light beams which are transmitted through the inside of the light guide in a practically longitudinal direction (LD) comprised between an angle of -30° and 30° with respect to the longitudinal direction "X",
- a plurality of surface engravings (2) interspersed between the plurality of optics (3a', 3b', 3c') along the longitudinal direction "X", each engraving formed by a roughness made on the surface itself of the second main surface (10b) of the light guide (10), wherein said roughness comprises a height Hᵣ less than the height Hₒ of the plurality of optics (3a', 3b', 3c') wherein the heights (Hᵣ, Hₒ) are measured in a direction "Z" for light extraction from the light guide (10), wherein each surface engraving (2) is arranged spaced from the next surface engraving (2) by a distance dxᵢ in the longitudinal direction "X",
the plurality of surface engravings (2) is configured to extract from the light guide the light beams which are transmitted through the inside of the light guide (10) in a direction substantially not parallel to the second main surface (10b) and in an oblique direction (OD) with respect to the longitudinal direction "X" between the two bands: [-90°; -30°] and [30°; 90°] with respect to the longitudinal direction "X" by the reflection of the light beams on the surface engravings (2).

2. The light guide (10), according to claim 1, wherein the plurality of optics (3a', 3b', 3c') is arranged distributed along the longitudinal direction "X" following an evolution of the geometry thereof from the zone of the light guide closest to the side surface (10c) for light entry (10c) to the furthest zone, wherein said evolution of the geometry of the optics (3a', 3b', 3c') is based on a growth in the height Hₒ thereof along this longitudinal direction "X", wherein the height Hₒ is measured in the direction "Z" for light extraction from the light guide, such that the height Hₒᵢ of the optics (3a') arranged in the zone closest to the side surface (10c) for light entry is smaller than the height of the optics (3c') arranged in the zone furthest from the side surface for light entry.

3. The light guide (10), according to claim 2, wherein the plurality of optics (3a', 3b', 3c') is arranged along the longitudinal direction "X" uniformly spaced at a distance Sₒ.

4. The light guide (10), according to claim 1 or 2, wherein the plurality of optics (3a', 3b', 3c') is arranged distributed along the longitudinal direction "X" following an evolution in terms of the gap thereof between adjacent optics from the zone of the light guide closest to the side surface for light entry to the furthest zone, such that the gap between two adjacent optics (3a', 3b, 3c') arranged in the zone closest to the side surface for light entry is larger than the gap between two adjacent optics arranged in the zone furthest from the side surface for light entry.

5. The light guide (10), according to any one of the preceding claims, wherein the light guide (10) decreases in thickness, from a zone of the light guide closest to the side surface for light entry to the zone furthest from the side surface for light entry, in order to enable each optic to be higher than the previous optic in the direction "Z" for extracting light from the light guide.

6. The light guide (10) according to any of the preceding claims, wherein one or more surface engravings (2) are interspersed between two consecutive optics (3') in the longitudinal direction "X".

7. The light guide (10), according to claim 6, wherein the plurality of surface engravings (2) is arranged distributed along the longitudinal direction "X" following an evolution of the geometry thereof from the zone of the light guide closest to the side surface for light entry to the furthest zone, wherein said evolution of the geometry of the surface engravings (2) is based on a growth along the longitudinal direction "X" of the width "Wᵣ" thereof (wherein the width "Wᵣ" is the magnitude of the engraving in the direction "X"), such that the length of the surface engravings (2a) arranged in the zone closest to the side surface for light entry is smaller than the length of the surface engravings (2c) arranged in the zone furthest from the side surface for light entry.

8. The light guide (10) according to one of claims 6 or 7, wherein the roughness of each surface engraving (2) extends a depth "P_{iy}" in a direction "Y" transverse to the longitudinal direction "X", wherein the plurality of surface engravings (2) is arranged following an evolution of the geometry thereof from the zone of the light guide closest to the side surface for light entry to the furthest zone, wherein said evolution of the geometry of the surface engravings (2) is based on an increase in the depth "P_{iy}" of the roughness, such that the magnitude "P_{iy}" of the roughness of the surface engravings (2a) arranged in the zone closest to the side surface for light entry is smaller than the length "P_{iy}" of the roughness of the surface engravings (2b) arranged in the zone furthest from the side surface for light entry.

9. The light guide (10), according to claim 6, 7 or 8, wherein the plurality of surface engravings (2) is arranged distributed along the longitudinal direction "X" following an evolution in terms of the gap thereof in the longitudinal direction "X" between adjacent surface engravings from the zone of the light guide closest to the side surface for light entry to the furthest zone, such that the gap between adjacent surface engravings arranged in the zone closest to the side surface for light entry is larger than the gap between adjacent surface engravings arranged in the zone furthest from the side surface for light entry.

10. The light guide (10) according to any of the preceding claims, wherein the first main surface (10a) and the second main surface (10b) further extend in a direction "Y" transverse to the longitudinal direction "X", wherein the plurality of optics (3a', 3b, 3c') is arranged aligned in rows along the transverse direction "Y", and wherein the plurality of surface engravings (2) is arranged aligned in rows along the transverse direction "Y", wherein two or more rows of surface engravings are arranged between two adjacent rows of optics.

11. The light guide (10), according to claim 10, wherein the roughness of each surface engraving (2) is spaced at a distance "d_{iy}" in the transverse direction "Y" between two adjacent engraved surfaces, wherein the plurality of surface engravings is arranged following an evolution of the geometry thereof from the zone of the light guide closest to the side surface for light entry to the furthest zone, wherein said evolution of the geometry of the surface engravings is based on a decrease in the gap distance "dᵢ" between adjacent surface engravings, such that the gap distance between the surface engravings arranged in the zone closest to the side surface for light entry is larger than the gap distance between the surface engravings arranged in the zone furthest from the side surface for light entry.

12. The light guide (10), according to claim 11, wherein:
- in a first zone closest to the side surface for light entry, the light guide comprises two rows of surface engravings between two consecutive optics, wherein each engraved surface of the first row is in an alternating position with respect to the position of the engraved surface of the second row, along a longitudinal direction "X";
- progressively along the longitudinal direction "X" and as a distance to the side surface for light entry increases, the engraved surfaces decrease the gap distance "dᵢ" between two adjacent engraved surfaces, such that they are no longer alternating, but rather there is an overlap between them, wherein the unengraved zone of the first row is in an alternating position with respect to the position of the unengraved zone of the second row, according to a longitudinal direction "X"; and
- in the final zone of the light guide furthest from the side surface for light entry, the engraving surfaces almost overlap, being able to become a continuous line, in order to maximise the extraction of the light beams which reach the end of the light guide by internal reflection.

13. The light guide (10) according to any of claims 1 to 8, wherein the first main surface (10a) and the second main surface (10b) additionally extend in a direction "Y" transverse to the longitudinal direction "X", wherein the plurality of optics (3a', 3b, 3c') and the plurality of surface engravings (2) are arranged interspersed in the transverse direction "Y".

14. A lighting system comprising a lighting panel comprising a light guide (10) according to any of claims 1 to 13, and at least one light emitter configured to direct the light towards one of the side surfaces of said light guide.

15. The lighting system according to claim 14, wherein it does not have a light diffuser covering the outside of the first main surface (10a).

## Patentansprüche

1. Lichtleiter (10), umfassend eine erste Hauptfläche (10a), die sich in einer Längsrichtung "X" erstreckt und konfiguriert ist, um Lichtstrahlen aus dem Lichtleiter zu extrahieren, eine zweite Hauptfläche (10b) gegenüber der ersten Hauptfläche (10a) und mindestens eine Seitenfläche (10c), die zwischen der ersten Hauptfläche (10a) und der zweiten Hauptfläche (10b) angeordnet ist, wobei die mindestens eine Seitenfläche (10c) konfiguriert ist, um Lichtstrahlen zu empfangen, die von mindestens einem Lichtsender (11) erzeugt wurden, und sie durch die Innenseite des Lichtleiters (10) als Effekt der internen Reflexion zu übertragen; wobei der Lichtleiter (10) Folgendes umfasst:
- eine Vielzahl von Optiken (3a', 3b', 3c'), die verteilt entlang der zweiten Hauptfläche (10b) des Lichtleiters (10) angeordnet ist, wobei jede Optik mit Bezug auf die folgende Optik um eine Distanz Dxᵢ in der Längsrichtung "X" beabstandet ist, wobei jede Optik eine dreieckige oder pyramidale Geometrie aufweist, und wobei die Vielzahl von Optiken konfiguriert ist, um aus dem Lichtleiter (10) durch die erste Hauptfläche (10a) durch Reflexion die Lichtstrahlen, die durch die Innenseite des Lichtleiters in praktisch einer Längsrichtung (LD) übertragen werden, die zwischen einem Winkel von -30° und 30° mit Bezug auf die Längsrichtung "X" liegt, zu extrahieren.
- eine Vielzahl von Flächengravuren (2), die zwischen der Vielzahl von Optiken (3a', 3b', 3c') entlang der Längsrichtung "X" eingestreut ist, wobei jede Gravur durch eine Rauheit gebildet ist, die auf der Fläche selbst der zweiten Hauptfläche (10b) des Lichtleiters (10) gebildet ist, wobei die Rauheit eine Höhe Hᵣ geringer als die Höhe Hₒ der Vielzahl von Optiken (3a', 3b', 3c') umfasst, wobei die Höhen (Hᵣ, Hₒ) in einer Richtung "Z" für die Lichtextraktion vom Lichtleiter (10) gemessen werden, wobei jede Flächengravur (2) beabstandet von der nächsten Flächengravur (2) um eine Distanz dxᵢ in der Längsrichtung "X" beabstandet ist,
die Vielzahl von Flächengravuren (2) konfiguriert ist, um vom Lichtleiter die Lichtstrahlen zu extrahieren, die durch die Innenseite des Lichtleiters (10) in einer Richtung, die im Wesentlichen nicht parallel zur zweiten Hauptfläche (10b) ist, und in einer schrägen Richtung (OD) mit Bezug auf die Längsrichtung "X" zwischen den zwei Bändern: [-90°; -30°] und [30°; 90°] mit Bezug auf die Längsrichtung "X" durch die Reflexion der Lichtstrahlen auf den Flächengravuren (2) übertragen werden.

2. Lichtleiter (10) nach Anspruch 1, wobei die Vielzahl von Optiken (3a', 3b', 3c'), verteilt entlang der Längsrichtung "X" gemäß einer Entwicklung der Geometrie davon vom Bereich des Lichtleiters, der am nächsten zur Seitenfläche (10c) für den Lichteintritt (10c) ist, zum am weitesten entfernten Bereich angeordnet ist, wobei die Entwicklung der Geometrie der Optiken (3a', 3b', 3c') auf einer Zunahme der Höhe Hₒ davon entlang dieser Längsrichtung "X" basiert, wobei die Höhe Hₒ in der Richtung "Z" für die Lichtextraktion vom Lichtleiter gemessen wird, so dass die Höhe Hₒᵢ der Optik (3a'), angeordnet im Bereich, der am nächsten zur Seitenfläche (10c) für den Lichteintritt ist, kleiner als die Höhe der Optik (3c') ist, die im Bereich, der am weitesten von der Seitenfläche für den Lichteintritt entfernt ist, angeordnet ist.

3. Lichtleiter (10) nach Anspruch 2, wobei eine Vielzahl von Optiken (3a', 3b', 3c') entlang der Längsrichtung "X" gleichförmig beabstandet in einer Distanz Sₒ angeordnet ist.

4. Lichtleiter (10) nach Anspruch 1 oder 2, wobei die Vielzahl von Optiken (3a', 3b', 3c') entlang der Längsrichtung "X" gemäß einer Entwicklung hinsichtlich des Zwischenraums davon zwischen benachbarten Optiken vom Bereich des Lichtleiters, der am nächsten zur Seitenfläche für den Lichteintritt ist, zum am weitesten entfernten Bereich verteilt angeordnet ist, so dass der Zwischenraum zwischen zwei benachbarten Optiken (3a', 3b, 3c'), angeordnet im Bereich, der am nächsten zur Seitenfläche für den Lichteintritt ist, grösser als der Zwischenraum zwischen zwei benachbarten Optiken ist, angeordnet im Bereich, der am weitesten von der Seitenfläche für den Lichteintritt entfernt ist.

5. Lichtleiter (10) nach einem der vorhergehenden Ansprüche, wobei der Lichtleiter (10) in der Dicke von einem Bereich des Lichtleiters, der am nächsten zur Seitenfläche für den Lichteintritt ist, zum Bereich, der am weitesten von der Seitenfläche für den Lichteintritt entfernt ist, abnimmt, um zu ermöglichen, dass jede Optik höher als die vorhergehende Optik in der Richtung "Z" für die Extraktion von Licht vom Lichtleiter ist.

6. Lichtleiter (10) nach einem der vorhergehenden Ansprüche, wobei eine oder mehrere Flächengravuren (2) zwischen zwei aufeinanderfolgenden Optiken (3') in der Längsrichtung "X" eingestreut sind.

7. Lichtleiter (10) nach Anspruch 6, wobei die Vielzahl von Flächengravuren (2) entlang der Längsrichtung "X" gemäß einer Entwicklung der Geometrie davon vom Bereich des Lichtleiters, der am nächsten zur Seitenfläche für den Lichteintritt ist, zum am weitesten entfernten Bereich verteilt angeordnet ist, wobei die Entwicklung der Geometrie der Flächengravuren (2) auf einer Zunahme entlang der Längsrichtung "X" der Breite "Wᵣ" davon basiert (wobei die Breite "Wᵣ" die Größe der Gravur in der Richtung "X" ist), so dass die Länge der Flächengravuren (2a), angeordnet im Bereich, der am nächsten zur Seitenfläche für den Lichteintritt ist, kleiner als die Länge der Flächengravuren (2c) ist, angeordnet im Bereich, der am weitesten von der Seitenfläche für den Lichteintritt entfernt ist.

8. Lichtleiter (10) nach einem der Ansprüche 6 oder 7, wobei sich die Rauheit jeder Flächengravur (2) um eine Tiefe "P_{iy}" in einer Richtung "Y" erstreckt, die quer zur Längsrichtung "X" ist, wobei die Vielzahl von Flächengravuren (2) gemäß einer Entwicklung der Geometrie davon vom Bereich des Lichtleiters, die am nächsten zur Seitenfläche für den Lichteintritt ist, zum am weitesten entfernten Bereich angeordnet ist, wobei die Entwicklung der Geometrie der Flächengravuren (2) auf einer Zunahme in der Tiefe "P_{iy}" der Rauheit basiert, so dass die Größe "P_{iy}" der Rauheit der Flächengravuren (2a), angeordnet im Bereich, der am nächsten zur Seitenfläche für den Lichteintritt ist, kleiner als die Länge "P_{iy}" der Rauheit der Flächengravuren (2b) ist, angeordnet im Bereich, der am weitesten von der Seitenfläche für den Lichteintritt entfernt ist.

9. Lichtleiter (10) nach Anspruch 6, 7 oder 8, wobei die Vielzahl von Flächengravuren (2) entlang der Längsrichtung "X" gemäß einer Entwicklung hinsichtlich des Zwischenraums davon in der Längsrichtung "X" zwischen benachbarten Flächengravuren vom Bereich des Lichtleiters, der am nächsten zur Seitenfläche für den Lichteintritt ist, zum am weitesten entfernten Bereich verteilt angeordnet ist, so dass der Zwischenraum zwischen benachbarten Flächengravuren, angeordnet im Bereich, der am nächsten zur Seitenfläche für den Lichteintritt ist, grösser als der Zwischenraum zwischen benachbarten Flächengravuren ist, angeordnet im Bereich, der am weitesten von der Seitenfläche für den Lichteintritt entfernt ist.

10. Lichtleiter (10) nach einem der vorhergehenden Ansprüche, wobei sich die erste Hauptfläche (10a) und die zweite Hauptfläche (10b) weiter in einer Richtung "Y" quer zur Längsrichtung "X" erstrecken, wobei die Vielzahl von Optiken (3a', 3b, 3c') ausgefluchtet in Reihen entlang der Querrichtung "Y" angeordnet ist, und wobei die Vielzahl von Flächengravuren (2) ausgefluchtet in Reihen entlang der Querrichtung "Y" angeordnet ist, wobei zwei oder mehrere Reihen von Flächengravuren zwischen zwei benachbarten Reihen von Optiken angeordnet sind.

11. Lichtleiter (10) nach Anspruch 10, wobei die Rauheit jeder Flächengravur (2) mit einer Distanz "d_{iy}" in der Querrichtung "Y" zwischen zwei benachbarten gravierten Flächen beabstandet ist, wobei die Vielzahl von Flächengravuren gemäß einer Entwicklung der Geometrie davon vom Bereich des Lichtleiters, der am nächsten zur Seitenfläche für den Lichteintritt ist, zum am weitesten entfernten Bereich verteilt angeordnet ist, wobei die Entwicklung der Geometrie der Flächengravuren auf einer Abnahme der Zwischenraumdistanz "dᵢ" zwischen benachbarten Flächengravuren basiert, so dass die Zwischenraumdistanz zwischen den Flächengravuren, angeordnet im Bereich, der am nächsten zur Seitenfläche für den Lichteintritt ist, grösser als die Zwischenraumdistanz zwischen den Flächengravuren ist, angeordnet im Bereich, der am weitesten von der Seitenfläche für den Lichteintritt entfernt ist.

12. Lichtleiter (10) nach Anspruch 11, wobei
- in einem ersten Bereich, der am nächsten zur Seitenfläche für den Lichteintritt ist, der Lichtleiter zwei Reihen von Flächengravuren zwischen zwei aufeinanderfolgenden Optiken umfasst, wobei sich die gravierte Fläche der ersten Reihe in einer alternierenden Position mit Bezug auf die Position der gravierten Fläche der zweiten Reihe entlang einer Längsrichtung "X" befindet,
- voranschreitend entlang der Längsrichtung "X" und als eine Distanz zur Erhöhung des Lichteintritts der Seitenfläche die gravierten Flächen die Zwischenraumdistanz "dᵢ" zwischen zwei benachbarten gravierten Flächen verringern, so dass sie nicht länger alternieren, sondern vielmehr eine Überlappung zwischen ihnen vorliegt, wobei sich der nicht gravierte Bereich der ersten Reihe in einer alternierenden Position mit Bezug auf die Position des nicht gravierten Bereichs der zweiten Reihe gemäß einer Längsrichtung "X" befindet; and
- im Endbereich des Lichtleiters, der am weitesten von der Seitenfläche für den Lichteintritt entfernt ist, die Gravurflächen fast überlappen, die zu einer kontinuierlichen Linie werden können, um die Extraktion von Lichtstrahlen, die das Ende des Lichtleiters durch interne Reflexion erreichen, zu maximieren.

13. Lichtleiter (10) nach einem der Ansprüche 1 bis 8, wobei sich die erste Hauptfläche (10a) und die zweite Hauptfläche (10b) zusätzlich in eine Richtung "Y" quer zur Längsrichtung "X" erstrecken, wobei die Vielzahl von Optiken (3a', 3b, 3c') und die Vielzahl von Flächengravuren (2) in der Querrichtung "Y" eingestreut angeordnet sind.

14. Beleuchtungssystem, umfassend ein Beleuchtungspaneel, umfassend einen Lichtleiter (10) nach einem der Ansprüche 1 bis 13 und mindestens einen Lichtsender, der konfiguriert ist, um Licht hin zu einer der Seitenflächen des Lichtleiters zu richten.

15. Beleuchtungssystem nach Anspruch 14, wobei es keinen Lichtdiffusor aufweist, der die Außenseite der ersten Hauptfläche (10a) abdeckt.

## Revendications

1. Guide de lumière (10), comprenant une première surface principale (10a), qui s'étend dans une direction longitudinale "X" et est configurée pour extraire des faisceaux lumineux du guide de lumière, une seconde surface principale (10b), opposée à la première surface principale (10a), et au moins une surface latérale (10c), prévue entre la première surface principale (10a) et la seconde surface principale (10b), dans lequel la au moins une surface latérale (10c) est configurée pour recevoir les faisceaux lumineux générés par au moins un émetteur de lumière (11) et pour les transmettre à travers l'intérieur du guide de lumière (10) comme un effet de réflexion interne ; le guide de lumière (10) comprenant :
- une pluralité d'optiques (3a', 3b', 3c') distribuées le long de la seconde surface principale (10b) du guide de lumière (10), chaque optique étant espacée par rapport à l'optique suivante selon une distance Dxᵢ dans la direction longitudinale "X", dans lequel chaque optique possède une géométrie triangulaire ou pyramidale, et dans lequel la pluralité d'optiques est configurée pour extraire du guide de lumière (10) à travers la première surface principale (10a) en réfléchissant les faisceaux lumineux qui sont transmis à travers l'intérieur du guide de lumière dans une direction quasiment longitudinale (LD) comprise entre un angle de -30° et 30° par rapport à la direction longitudinale "X",
- une pluralité de gravures en surface (2) intercalées entre la pluralité d'optiques (3a', 3b', 3c') le long de la direction longitudinale "X", chaque gravure étant formée par une rugosité créée sur la surface elle-même de la seconde surface principale (10b) du guide de lumière (10), dans lequel ladite rugosité comprend une hauteur Hᵣ inférieure à la hauteur Hₒ de la pluralité d'optiques (3a', 3b', 3c'), dans lequel les hauteurs (Hᵣ, Hₒ) sont mesurées dans une direction "Z" d'extraction de la lumière du guide de lumière (10), dans lequel chaque gravure en surface (2) est espacée de la gravure en surface suivante (2) selon une distance dxᵢ dans la direction longitudinale "X",
la pluralité de gravures en surface (2) étant configurée pour extraire du guide de lumière les faisceaux lumineux qui sont transmis à travers l'intérieur du guide de lumière (10) dans une direction sensiblement non parallèle à la seconde surface principale (10b) et dans une direction oblique (OD) par rapport à la direction longitudinale "X" entre les deux bandes : [-90° ; -30°] et [30° ; 90°] par rapport à la direction longitudinale "X" par la réflexion des faisceaux lumineux sur les gravures en surface (2).

2. Guide de lumière (10) selon la revendication 1, dans lequel la pluralité d'optiques (3a', 3b', 3c') est répartie le long de la direction longitudinale "X" en suivant une évolution de la géométrie de celles-ci entre la zone du guide de lumière la plus proche de la surface latérale (10c) pour l'entrée de lumière (10c) et la zone la plus éloignée, dans lequel ladite évolution de la géométrie des optiques (3a', 3b', 3c') repose sur une augmentation de la hauteur Hₒ de celles-ci le long de cette direction longitudinale "X", dans lequel la hauteur Hₒ est mesurée dans la direction "Z" d'extraction de lumière du guide de lumière, si bien que la hauteur Hₒᵢ des optiques (3a') prévues dans la zone la plus proche de la surface latérale (10c) pour l'entrée de lumière est inférieure à la hauteur des optiques (3c') prévues dans la zone la plus éloignée de la surface latérale pour l'entrée de lumière.

3. Guide de lumière (10) selon la revendication 2, dans lequel la pluralité d'optiques (3a', 3b', 3c') est prévue le long de la direction longitudinale "X" avec un espacement uniforme selon une distance Sₒ.

4. Guide de lumière (10) selon la revendication 1 ou 2, dans lequel la pluralité d'optiques (3a', 3b', 3c') est répartie le long de la direction longitudinale "X" en suivant une évolution en termes d'espace entre les optiques adjacentes entre la zone du guide de lumière la plus proche de la surface latérale pour l'entrée de lumière et la zone la plus éloignée, si bien que l'espace entre deux optiques adjacentes (3a', 3b, 3c') prévues dans la zone la plus proche de la surface latérale pour l'entrée de lumière est plus large que l'espace entre deux optiques adjacentes prévues dans la zone la plus éloignée de la surface latérale pour l'entrée de lumière.

5. Guide de lumière (10) selon l'une quelconque des revendications précédentes, dans lequel le guide de lumière (10) diminue d'épaisseur, entre une zone du guide de lumière la plus proche de la surface latérale pour l'entrée de lumière et la zone la plus éloignée de la surface latérale pour l'entrée de lumière, afin de permettre à chaque optique d'être plus haute que l'optique précédente dans la direction "Z" d'extraction de la lumière du guide de lumière.

6. Guide de lumière (10) selon l'une quelconque des revendications précédentes, dans lequel une ou plusieurs gravure(s) en surface (2) est/sont intercalée(s) entre deux optiques consécutives (3') dans la direction longitudinale "X".

7. Guide de lumière (10) selon la revendication 6, dans lequel la pluralité de gravures en surface (2) est répartie le long de la direction longitudinale "X" en suivant une évolution de la géométrie de celles-ci entre la zone du guide de lumière la plus proche de la surface latérale pour l'entrée de lumière et la zone la plus éloignée, dans lequel ladite évolution de la géométrie des gravures en surface (2) repose sur une augmentation le long de la direction longitudinale "X" de la largeur "Wᵣ" de celles-ci (la largeur "Wᵣ" correspondant à l'ampleur des gravure dans la direction "X"), si bien que la longueur des gravures en surface (2a) prévues dans la zone la plus proche de la surface latérale pour l'entrée de lumière est inférieure à la longueur des gravures en surface (2c) prévues dans la zone la plus éloignée de la surface latérale pour l'entrée de lumière.

8. Guide de lumière (10) selon l'une des revendications 6 ou 7, dans lequel la rugosité de chaque gravure en surface (2) s'étend à une profondeur "P_{iy}" dans une direction "Y" transversale par rapport à la direction longitudinale "X", dans lequel la pluralité de gravures en surface (2) est prévue en suivant une évolution de la géométrie de celles-ci entre la zone du guide de lumière la plus proche de la surface latérale pour l'entrée de lumière et la zone la plus éloignée, dans lequel ladite évolution de la géométrie des gravures en surface (2) repose sur une augmentation de la profondeur "P_{iy}" de la rugosité, si bien que l'ampleur "P_{iy}" de la rugosité des gravures en surface (2a) prévues dans la zone la plus proche de la surface latérale pour l'entrée de lumière est inférieure à la longueur "P_{iy}" de la rugosité des gravures en surface (2b) prévues dans la zone la plus éloignée de la surface latérale pour l'entrée de lumière.

9. Guide de lumière (10) selon la revendication 6, 7 ou 8, dans lequel la pluralité de gravures en surface (2) est répartie le long de la direction longitudinale "X" en suivant une évolution en termes d'espacement dans la direction longitudinale "X" entre les gravures en surface adjacentes entre la zone du guide de lumière la plus proche de la surface latérale pour l'entrée de lumière et la zone la plus éloignée, si bien que l'espace entre les gravures en surface adjacentes prévues dans la zone la plus proche de la surface latérale pour l'entrée de lumière est plus large que l'espace entre les gravures en surface adjacentes prévues dans la zone la plus éloignée de la surface latérale pour l'entrée de lumière.

10. Guide de lumière (10) selon l'une quelconque des revendications précédentes, dans lequel la première surface principale (10a) et la seconde surface principale (10b) s'étendent en outre dans une direction "Y" transversale par rapport à la direction longitudinale "X", dans lequel la pluralité d'optiques (3a', 3b, 3c') est alignée en rangées le long de la direction transversale "Y", et dans lequel la pluralité de gravures en surface (2) est alignée en rangées le long de la direction transversale "Y", dans lequel deux rangées ou plus de gravures en surface sont prévues entre deux rangées d'optiques adjacentes.

11. Guide de lumière (10) selon la revendication 10, dans lequel la rugosité de chaque gravure en surface (2) est espacée selon une distance "d_{iy}" dans la direction transversale "Y" entre deux surfaces gravées adjacentes, dans lequel la pluralité de gravures en surface est prévue en suivant une évolution de la géométrie de celles-ci entre la zone du guide de lumière la plus proche de la surface latérale pour l'entrée de lumière et la zone la plus éloignée, dans lequel ladite évolution de la géométrie des gravures en surface repose sur une diminution de la distance d'espacement "dᵢ" entre des gravures en surface adjacentes, si bien que la distance d'espacement entre les gravures en surface prévues dans la zone la plus proche de la surface latérale pour l'entrée de lumière est supérieure à la distance d'espacement entre les gravures en surface prévues dans la zone la plus éloignée de la surface latérale pour l'entrée de lumière.

12. Guide de lumière (10) selon la revendication 11, dans lequel :
- dans une première zone la plus proche de la surface latérale pour l'entrée de lumière, le guide de lumière comprend deux rangées de gravures en surface entre deux optiques consécutives, dans lequel chaque surface gravée de la première rangée se trouve dans une position alternée par rapport à la position de la surface gravée de la seconde rangée, le long d'une direction longitudinale "X";
- progressivement le long de la direction longitudinale "X" et au fur et à mesure qu'une distance par rapport à la surface latérale pour l'entrée de lumière augmente, les surfaces gravées réduisent la distance d'espacement "dᵢ" entre deux surfaces gravées adjacentes, si bien qu'elles ne sont plus alternées, mais il existe un chevauchement entre elles, dans lequel la zone non gravée de la première rangée se trouve dans une position alternée par rapport à la position de la zone non gravée de la seconde rangée, selon une direction longitudinale "X" ; et
- dans la zone finale du guide de lumière la plus éloignée de la surface latérale pour l'entrée de lumière, les surfaces gravées se chevauchent quasiment, et peuvent devenir une ligne continue, afin de maximiser l'extraction des faisceaux lumineux qui atteignent l'extrémité du guide de lumière par réflexion interne.

13. Guide de lumière (10) selon l'une quelconque des revendications 1 à 8, dans lequel la première surface principale (10a) et la seconde surface principale (10b) s'étendent en outre dans une direction "Y" transversale par rapport à la direction longitudinale "X", dans lequel la pluralité d'optiques (3a', 3b, 3c') et la pluralité de gravures en surface (2) sont intercalées dans la direction transversale "Y".

14. Système d'éclairage comprenant un panneau d'éclairage comprenant un guide de lumière (10) selon l'une quelconque des revendications 1 à 13, et au moins un émetteur de lumière configuré pour orienter la lumière vers l'une des surfaces latérales dudit guide de lumière.

15. Système d'éclairage selon la revendication 14, dans lequel il ne possède pas de diffuseur de lumière qui recouvre l'extérieur de la première surface principale (10a).
